# EUROPEAN PATENT SPECIFICATION

(11) **EP 0 471 554 B1**
(45) Date of publication and mention of the grant of the patent: **11.12.1996**
(21) Application number: 91307453.0
(22) Date of filing: 13.08.1991
(51) Int. Cl.: C08K 5/15, C08L 67/02, C08K 5/10

(54) **Resin composition containing a polyester, a polyester elastomer and a sorbitan ester**
Harzzusammensetzung aus einem Polyester, einem Polyesterelastomer und einem Sorbitanester
Composition de résine contenant un polyester, un élastomère de polyester et un ester de sorbitane

(30) Priority: 14.08.1990 JP 214744/90; 08.04.1991 JP 73439/91
(43) Date of publication of application: 19.02.1992
(73) Proprietor: POLYPLASTICS CO. LTD., Osaka-shi, Osaka 541 (JP)
(72) Inventor: Mochizuki, Mitsuhiro, Fuji-shi, Shizuoka (JP); Wada, Mitsuo, Fuji-shi, Shizuoka (JP); Seitou, Hiromitsu, Fuji-shi, Shizuoka (JP)
(74) Representative: Ackroyd, Robert

(56) References cited:
- EP-A- 0 066 997
- EP-A- 0 127 981
- DE-A- 2 531 963
- US-A- 4 098 752
- US-A- 4 184 997
- US-A- 4 421 804
- CENTRAL PATENTS INDEX, BASIC ABSTRACTS JOURNAL, Section A, Week 8516, 12 June 1985, Derwent Publications Ltd., London (GB); Class A, AN 85-095914/16

## Description

The present invention relates to a polyester resin composition. More particularly, the present invention is concerned with a polyester resin composition having excellent low-temperature toughness and moldability, particularly excellent bite into pellets during injection molding and excellent releasability.

Crystalline thermoplastic polyester resins, for example, polyalkylene terephthalate resins, have found extensive applications as engineering plastics in automobile parts, electrical and electronic components, etc., by virtue of their excellent mechanical, electrical, and other physical and chemical properties and good processability. The expansion and diversification of the applications, however, have made it necessary for the resins to have further improved performance and speciality. For example, in automobile industries, it is desired to have excellent mechanical properties, particularly flexibility and impact resistance, at low temperature from the viewpoint of safety.

In order to meet the demand, a proposal has been made to blend a thermoplastic polyester resin with a thermoplastic elastomer such as an olefin polymer or a rubbery polymer. The polyester resin blended with the elastomer has mechanical properties improved to some extent but is highly susceptible to surface peeling due to poor compatibility. The solution of this problem has been desired in the art.

The polyester resin composition can be relatively readily molded. The coexistence of an elastomer, however, is liable to cause deterioration of the releasability. This leads to various problems (deformation, cracking, etc.) during molding of articles having a complicated shape or articles having a small size or a small wall thickness. For this reason, in order to improve the moldability of the polyester resin composition, a proposal has been made wherein a paraffin oil, a fatty acid amide, a fatty acid ester or the like is added as a releasing agent. The polyester resin blended with the releasing agent or the like has an improved releasability but brings about poor bite into pellets or slipping on a screw attributable to blooming of the releasing agent during a preliminary drying prior to molding, so that no stable molding can be conducted for a long period of time. Further, in recent years, there is an ever-increasing tendency to reuse mold scraps for the purpose of reducing the production cost of molded articles. In this case, the poor bite is more significant, and the solution to the problem has been desired in the art. Some of the above-described problems can be solved to some extent through the addition of a metallic soap to the surface of the pellet. However, the solution is still insufficient, and there exist problems such as complicated work of addition, environmental problem in molding plants or corrosion of metallic plates.

In view of the above-described demand, the present inventors have made intensive studies with a view to developing a polyester resin composition which is excellent in mechanical properties, particularly in low-temperature toughness, excellent in moldability, particularly in releasability, and free from trouble derived from poor bite into pellets, and enables molding to be stably conducted for a long period of time and, as a result, have found that it is useful to add and use a polyester elastomer and a sorbitan ester in combination with a crystalline thermoplastic resin polyester, which has led to the completion of the present invention.

Accordingly, the present invention provides a polyester resin composition characterized by comprising:
(A) 50 to 99 parts by weight of a crystalline thermoplastic polyester resin;
(B) 1 to 50 parts by weight of a polyester elastomer; and blended with 100 parts by weight in total of said components (A) and (B),
(C) 0.01 to 10 parts by weight of a sorbitan ester comprising a sorbitan and a fatty acid having 12 or more carbon atoms.

The components constituting the composition of the present invention will now be described in detail.

At the outset, the term "crystalline thermoplastic polyester resin (A)" used in the present invention is intended to mean a crystalline polyester prepared by the polycondensation of a dicarboxylic acid with a low molecular weight dihydroxy compound, that of a hydroxy carboxylic acid compound, that of a mixture of these three components, or other polycondensation. The effect of the present invention can be attained even when the polyester is any of homopolyesters and copolyesters.

Examples of the dicarboxylic acid compound used in the present invention include known dicarboxylic acids, such as terephthalic, isophthalic, naphthalenedicarboxylic, diphenylcarboxylic, diphenyletherdicarboxylic, diphenylethanedicarboxylic, cyclohexanedicarboxylic, adipic and sebacic acids; and substituted products of these acids. It is also possible to use the dicarboxylic acid compounds for polymerization in the form of an ester-forming derivative, for example, in the form of a lower alcohol ester, such as dimethyl ester. They may also be used in combination of two or more of them.

Examples of the dihydroxy compound constituting the crystalline polyester (A) of the present invention include hydroxy compounds such as ethylene glycol, propylene glycol, butanediol, neopentyl glycol, hydroquinone, resorcinol, dihydroxyphenyl, naphthalenediol, dihydroxydiphenyl ether, cyclohexanediol, 2,2-bis(4-hydroxyphenyl)propane, diethoxylated bisphenol A; and substituted products thereof. They may be used alone or in the form of a mixture of two or more of them

Examples of the hydroxycarboxylic acid include hydroxycarboxylic acids such as hydroxybenzoic, hydroxynaphthoic and diphenyleneoxycarboxylic acids; and substituted products thereof. It is also possible to use ester-forming derivatives of these compounds. In the present invention, they may be used alone or in combination of two or more of them.

Further, the polyester may have a branched or crosslinked structure comprising the above-described components in combination with a minor amount of other trifunctional monomers such as trimellitic acid, trimesic acid, pyromellitic acid, pentaerythritol and trimethylolpropane.

In the present invention, any crystalline thermoplastic polyester formed by polycondensation through the use of these compounds as the monomer components can be used as the component (A) of the present invention. The polyester is preferably a resin mainly composed of polyalkylene terephthalate, still preferably a resin mainly composed of polybutylene terephthalate.

The polyester elastomer (3) used in the composition of the present invention is preferably a copolymer comprising a hard segment comprised of a polyester of a low molecular weight diol and a soft segment comprised of an ester of a polyether diol having a number-average molecular weight of 200 to 6000. The ratio of the hard segment to the soft segment is preferably (1 - 99% by weight) : (99 - 1% by weight), more preferably (5 - 95% by weight) : (95 - 5% by weight). Examples of the dicarboxylic acid moiety constituting the polyester hard segment include aromatic dicarboxylic acids such as terephthalic acid, isophthalic acid, 2, 6- and 1,5-naphthalenedicarboxylic acids, and bis(p-carboxyphenyl)methane, aliphatic dicarboxylic acids such as 1,4-cyclohexapedicarboxylic and cyclopentanedicarboxylic acids, and aliphatic dicarboxylic acids such as adipic and sebacic acids. From the viewpoint of mechanical properties and heat resistance, it is preferred that the aromatic dicarboxylic acid amount to at least 50% by mole, and terephthalic and isophthalic acids are particularly preferred.

Examples of the diol moiety constituting the hard segment include aliphatic and alicylic diols having 2 to 12 carbon atoms, such as ethylene glycol, propylene glycol, 1,4-butanediol, 1,4-butenediol, neopentyl glycol, 1,5-pentanediol and 1,6-hexanediol, and bisphenols such as bis(p-hydroxy)diphenyl, bis(p-hydroxyphenyl)methane and bis(p-hydroxyphenyl)-propane; and mixtures thereof. Among them, aliphatic diols having 2 to 8 carbon atoms are particularly preferred.

The acid moiety used or constituting the above-described hard segment is preferably used as the carboxylic acid moiety constituting the soft segment of the polyester elastomer (B). On the other hand, polyether diols, particularly poly(alkylene oxide) glycol, are suitable as the diol moiety, and examples thereof include poly(ethylene oxide) glycol, poly(1,3- and 1,2-propylene oxide) glycol, poly(tetramethylene oxide) glycol, polyethylene oxide/polypropylene oxide block copolymer glycol and polyethylene oxide/poly-(tetramethylene oxide) block copolymer glycol. Among them, poly(tetramethylene oxide) glycol is particularly preferred. It is a matter of course that they may be used in combination of two or more of them. The average molecular weight of the polyether glycols ranges from 200 to 6000.

The polyester elastomer (B) can be prepared by any method, and some polyester elastcmers are commercially available.

A particularly preferred polyester elastomer as the component (B) is one comprising a hard segment comprised of polyethylene terephthalate, polybutylene terephthalate or polybutene terephthalate and a soft segment comprised of a terephthalate and/or isophthalate of polyethylene oxide glycol or polybutylene oxide glycol having a molecular weight of 200 to 6000.

In the present invention, proportions of blending of the crystalline thermoplastic polyester resin (A) and the polyester elastomer (B) are 50 to 99 parts by weight and 1 to 50 parts by weight, respectively, preferably 60 to 97 parts by weight and 3 to 40 parts by weight, respectively.

When the amount of the polyester elastomer as the component (B) exceeds 50 parts by weight, the rigidity of the resin composition lowers to a considerable extent, while when the amount is less than 1 part by weight, no sufficient improvement in the impact resistance can be attained.

The sorbitan ester used as the component (C) in the present invention is an aliphatic acid ester comprising a sorbitan and a fatty acid having 12 or more carbon atoms.

Examples of the fatty acid having 12 or more carbon atoms constituting the ester include lauric, oleic, palmitic, stearic, behenic and montanoic acids, and the number of carbon atoms of the fatty acid is preferably 16 to 32, particularly preferably 18 to 22. When the number of carbon atoms is less than 12, no significant improvement in the releasability can be attained. On the other hand, when the number of carbon atoms exceeds 32, the heat resistance often lowers unfavorably.

The sorbitan ester (C) used in the present invention can be prepared by a method known per se. The sorbitan ester is preferably one adjusted so as to have a hydroxyl value of 50 to 400 exclusive and the hydroxyl value is preferably 100 to 300, particularly preferably 150 to 300. When the hydroxyl value is less than 50, blooming is observed during drying of pellets, etc., which causes metering time in molding to be varied, so that no stable molding can be conducted. On the other hand, when the hydroxyl value is 400 or more, the heat resistance and other properties lower unfavorably.

Preferred examples of the sorbitan ester include monopalmitate, monostearate, distearate, tristearate, monobehenate, dibehenate, tribehenate and monomontanate. Still preferred examples of the ester include esters of sorbitan with stearic or behenic acid, such as monostearate, distearate, monobehenate and dibehenate

The amount of addition of the component (C) based on 100 parts in total of the components (A) and (B) is 0.01 to 10 parts by weight, preferably 0.05 to 5 parts by weight, more preferably 0.1 to 2 parts by weight. When the amount of the component (C) is excessively small, the effect of improving the bite into pellets is poor. On the other hand, when the amount is excessively large, the mechanical properties lower unfavorably.

It is also possible to use the resin composition of the present invention in combination with a minor amount of another thermoplastic resin as an auxiliary additive in such an amount that the purpose of use of the resin composition is not spoiled. The other thermoplastic resin used herein may be any one as far as it is stable at high temperature.

Examples of the other thermoplastic resin include polyamide, ABS, polyphenylene oxide, polyalkyl acrylate, polyacetal, polysulfone, polyethersulfone, polyetherimide, polyetherketone and fluororesin. These thermoplastic resins may also be used in the form of a mixture of two or more of them.

It is a matter of course that the composition of the present invention may be blended with known materials generally added to thermoplastic resins, that is, stabilizers such as antioxidants, heat stabilizers and ultraviolet absorbers, antistatic agents, flame retardants, colorants such as dyes and pigments, lubricants, plasticizers, crystallization accelerators, nucleating agents and inorganic fillers for the purpose of imparting desired properties to the resin depending upon the intended use of the resin composition.

Examples of the inorganic filler include general inorganic fibers such as those of glass, carbon, ceramic, boron, potassium titanate and asbestos, and particulate fillers, flaky inorganic compounds and whiskers, such as calcium carbonate, highly dispersive silicates, alumina, aluminum hydroxide, talc, clay, mica, glass flake, glass powder, glass bead, quartz powder, quartz sand, wollastonite, carbon black, barium sulfate, plaster of Paris, silicon carbide, alumina, boron nitride and silicon nitride. These inorganic fillers may be used alone or in the form of a mixture of two or more of them.

The composition of the present invention can easily be prepared by making use of facilities and methods employed in the preparation of ordinary synthetic resin compositions. They include, for example, (i) a method which comprises mixing necessary components, kneading and extruding the mixture by means of an extruder to prepare pellets and molding the pellets, (ii) a method which comprises preparing pellets different from each other in the composition, mixing the pellets with each other in respective predetermined amounts, and molding the mixture to prepare a molded article having an intended composition, and (iii) a method wherein at least one of the components is directly fed in a molding machine. Further, a method wherein part of the resin components is mixed in a fine powder with the other components is preferred for homogeneous blending of the components.

The present invention will now be described in more detail by referring to the following Examples.

### Examples 1 to 10 and Comparative Examples 1 to 6

Polybutylene terephthalate (A) is blended with various polyester elastomers (B) and sorbitan esters (C) in proportions specified in Table 1, and the blend is melt-kneaded by means of a twin-screw extruder to prepare pellets. Then, the pellets were injection molded into a test piece for use in the evaluation.

For comparison, as described in Table 2, the same evaluation was conducted on a test piece containing no sorbitan ester and one containing a fatty acid amide or other fatty acid ester.

The results are given in Tables 1 and 2.

Items and methods of evaluation are as follows.

### (1) Hydroxyl value:

The hydroxyl value was measured by Standard Methods for the Analysis of Oils, Fats and Derivatives: 2,4,9,2-71 Hydroxyl Value (pyridine-acetic anhydride method) established by The Japan Oil Chemists' Society.

### (2) Evaluation of bite into of pellets (variation in metering time):

A box (^{D}75 mm x ^{W}40 mm /x ^{H}40 mm x ^{t}2 mm) was formed under the following conditions to measure a metering time (plasticizing time). The lower the average value or the smaller the variation, the better the bite into pellets.

The results are given on the average value, maximum value and minimum value in 200 shot molding.

The evaluation was conducted on two kinds of pellets, i.e., a fresh pellet immediately after the preparation and a pellet containing 50% of a regenerated material (a material pulverized after the molding).

Molding machine: Toshiba IS30EPN 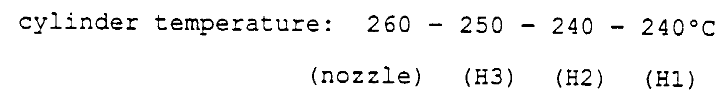 mold temperature : 60°C
number of revolutions of screw: 160 rpm

### (3) Releasability:

In the molding of the same article as that formed in the evaluation on the bite into pellets, the deformation of a molded article caused by an ejector pin was evaluated according to the following rank:
- ○:: free from deformation
- Δ:: slight deformation
- ×:: large deformation

### (4) Appearance test of molded article (blooming of releasing agent):

A flat plate (50 mm x 50 mm; thickness 3 mm) was formed and aged at 120°C for 100 hr, and surface change due to blooming was observed with the naked eye. The appearance was evaluated according to the following rank:
1 ... no change of surface gloss
2 ... slight lowering of surface gloss
3 ... lowering of surface gloss
4 ... lowering of surface gloss and slight blooming
5 ... significant blooming on the surface (considerable lowering of surface gloss)
(5) Tensile elongation:

The tensile elongation was measured according to ASTM D-638 through the use of an ASTM No. 4 dumbbell (thickness: 1 mm). The evaluation was conducted at room temperature (23°C) and a low temperature (0°C).

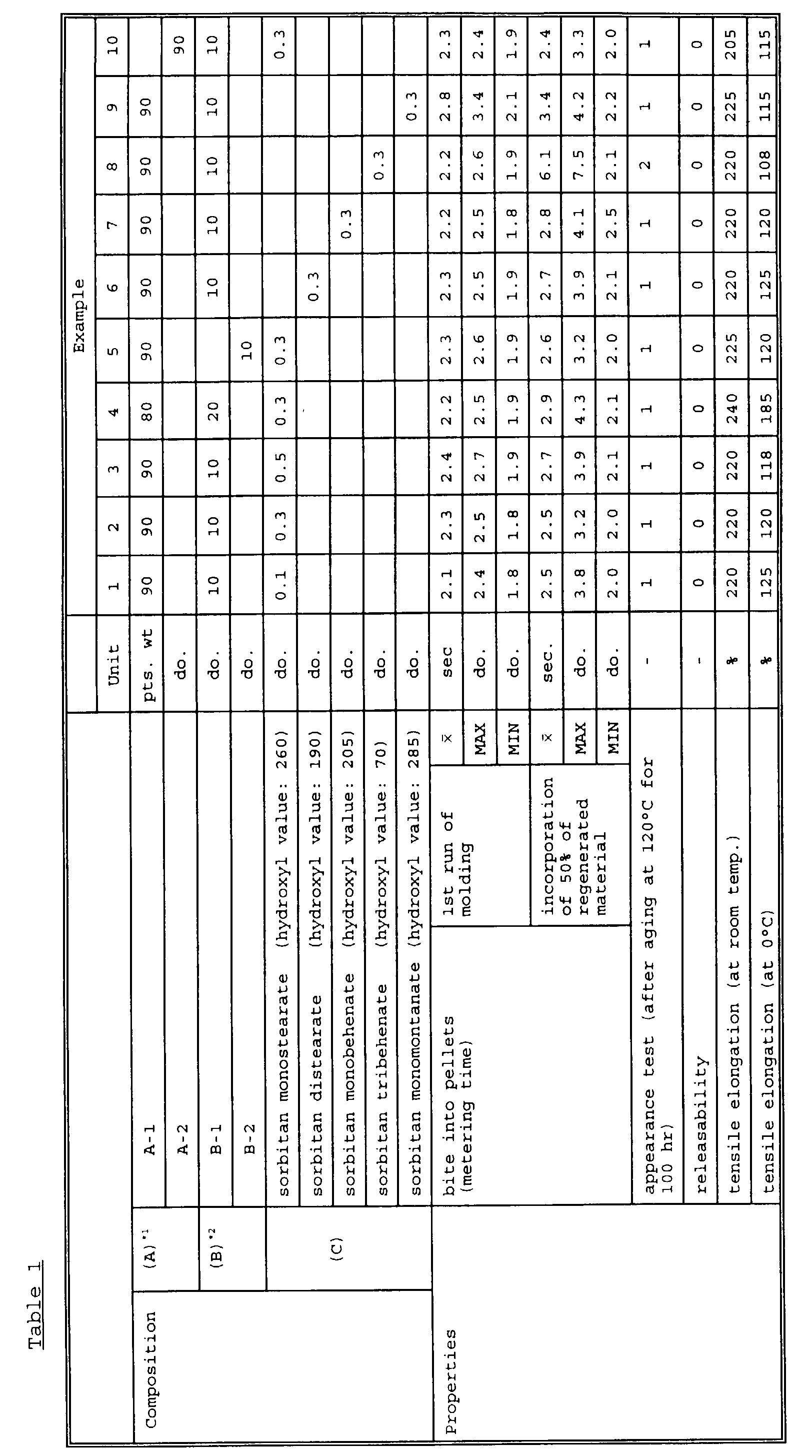

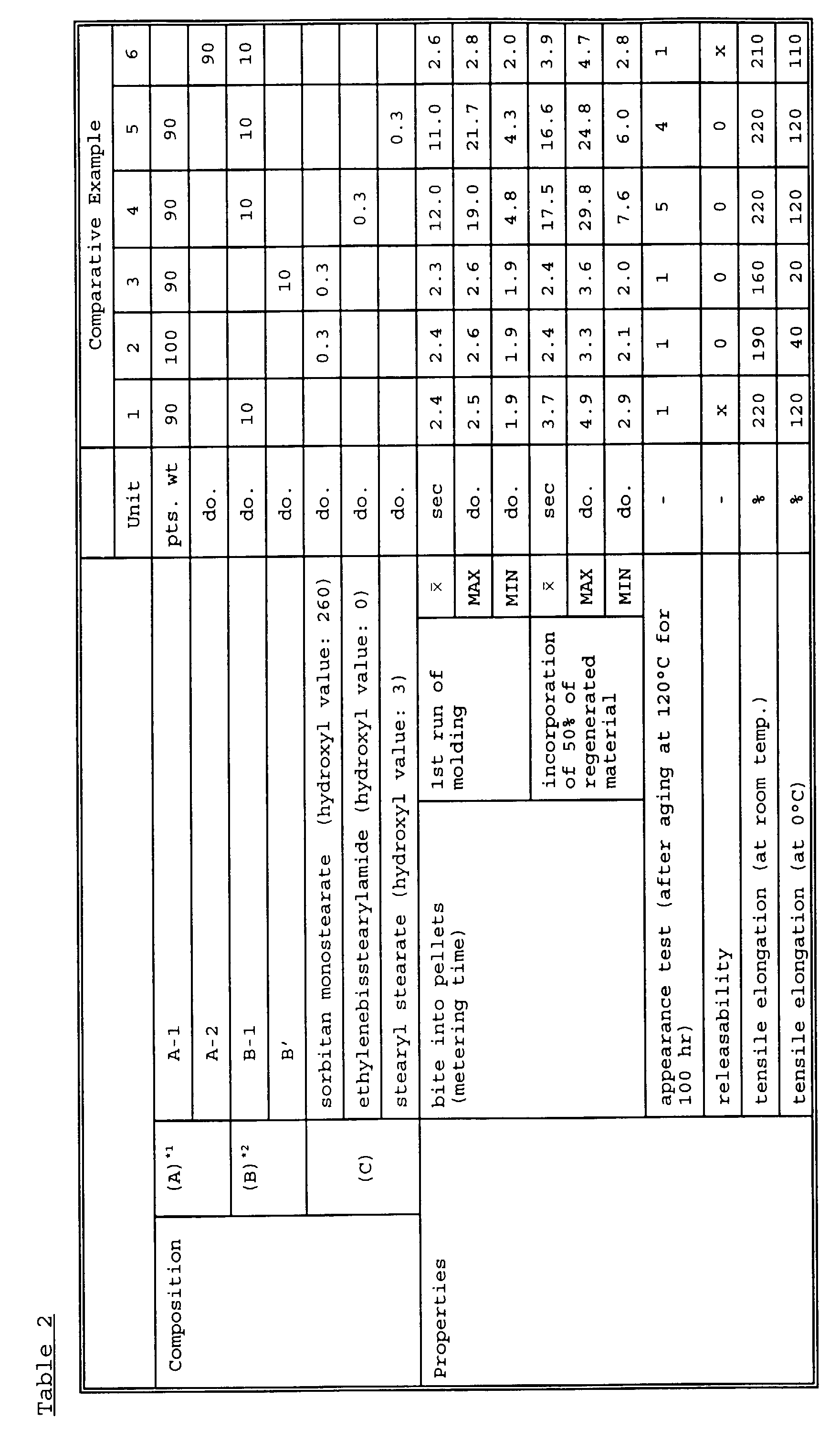

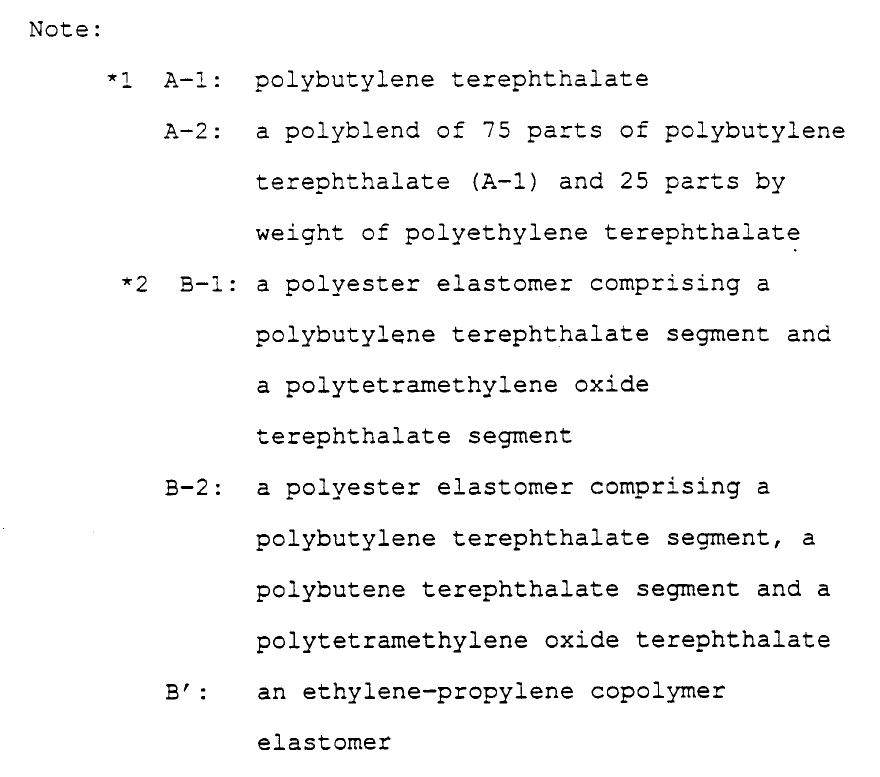

As is apparent from the foregoing description and Examples, the polyester resin composition of the present invention comprising a crystalline thermoplastic polyester resin and blended therewith a polyester elastomer and a sorbitan ester is excellent in the low-temperature toughness and superior in the bite into pellet during molding to the conventional resin composition containing various lubricants and fatty acid amides used for the same purpose, exhibits no lowering in the bite even in the case of the use of a regenerated material, enables molding to be stably conducted for a long period of time, and is excellent in the releasability, which renders the composition of the present invention very favorable as a molding composition.

The composition of the present invention is suitable for use in components having a small wall thickness or a complicate shape, for examples, various gears and connectors for automobiles, electrical equipment, etc., by virtue of the above-described effects.

## Claims

1. A polyester resin composition characterized by comprising:
(A) 50 to 99 parts by weight of a crystalline thermoplastic polyester resin;
(B) 1 to 50 parts by weight of a polyester elastomer; and blended with 100 parts by weight in total of said components (A) and (B),
(C) 0.01 to 10 parts by weight of a sorbitan ester comprising a sorbitan and a fatty acid having 12 or more carbon atoms.

2. A polyester resin composition according to claim 1, characterised in that said crystalline thermoplastic polyester resin (A) is a resin composed mainly of polybutylene terephthalate.

3. A polyester resin composition according to claim 1 or 2, characterised in that said polyester elastomer (B) is a copolyester comprising a hard segment comprised of repeating units of a phthalate of a lower aliphatic glycol and a soft segment comprised of a phthalate of a polyalkylene oxide glycol.

4. A polyester resin composition according to any one of claims 1 to 3, characterised in that said sorbitan ester (C) has a hydroxyl value of 50 to 400 exclusive.

5. A polyester resin composition according to any one of claims 1 to 3, characterised in that said sorbitan ester (C) has a hydroxyl value of 150 to 300 exclusive.

6. A polyester resin composition according to any one of claims 1 to 5, characterised in that the fatty acid constituting said component (C) is one having 16 to 32 carbon atoms.

7. A polyester resin composition according to any one of claims 1 to 6 characterised in that said component (C) is an ester of a sorbitan with stearic acid or behenic acid.

## Patentansprüche

1. Eine Polyesterharzzusammensetzung, welche dadurch gekennzeichnet ist, daß sie
50 bis 99 Gewichtsteile eines kristallinen thermoplastischen Polyesterharzes (A),
1 bis 50 Gewichtsteile eines Polyesterelastomers (B) und gemischt mit insgesamt 100 Gewichtsteilen der genannten Komponenten (A) und (B)
0,01 bis 10 Gewichtsteile eines Sorbitanesters (C) beinhaltet, welcher ein Sorbitan und eine Fettsäure mit 12 oder mehr Kohlenstoffatomen enthält.

2. Eine Polyesterharzzusammensetzung gemäß Anspruch 1, dadurch gekennzeichnet, daß das genannte kristalline thermoplastische Polyesterharz (A) ein hauptsächlich aus Polybutylenterephthalat zusammengesetztes Harz ist.

3. Eine Polyesterharzzusammensetzung gemäß Anspruch 1 oder 2, dadurch gekennzeichnet, daß das genannte Polyesterelastomer (B) ein Copolyester ist, welcher ein hartes Segment, das sich wiederholende Einheiten eines Phthalats eines niederen aliphatischesn Glykols beinhaltet, und ein weiches Segment enthält, das ein Phthalat eines Polyalkylenoxidglykols beinhaltet.

4. Eine Polyesterharzzusammensetzung gemäß irgendeinem der Ansprüche 1 bis 3, dadurch gekennzeichnet, daß der genannte Sorbitanester (C) einen Hydroxylwert von ausschließlich 50 bis 400 hat.

5. Eine Polyesterharzzusammensetzung gemäß irgendeinem der Ansprüche 1 bis 3, dadurch gekennzeichnet, daß der genannte Sorbitanester (C) einen Hydroxylwert von ausschließlich 150 bis 300 hat.

6. Eine Polyesterharzzusammensetzung gemäß irgendeinem der Ansprüche 1 bis 5, dadurch gekennzeichnet, daß die Fettsäure in der genannten Komponente (C) eine ist, welche 16 bis 32 Kohlenstoffatome aufweist.

7. Eine Polyesterharzzusammensetzung gemäß irgendeinem der Ansprüche 1 bis 6, dadurch gekennzeichnet, daß die genannte Komponente (C) ein Ester eines Sorbitans mit Stearinsäure oder Behensäure ist.

## Revendications

1. Une composition de résine polyester caractérisée par le fait qu'elle comprend :
(A) 50 à 99 parties en poids d'une résine polyester thermoplastique cristalline ;
(B) 1 à 50 parties en poids d'un élastomère polyester ; et, en mélange avec 100 parties en poids au total desdits composants (A) et (B),
(C) 0,01 à 10 parties en poids d'un ester de sorbitanne comprenant un sorbitanne et un acide gras ayant au moins 12 atomes de carbone.

2. Une composition de résine polyester selon la revendication 1, caractérisée par le fait que ladite résine polyester thermoplastique cristalline (A) est une résine constituée principalement de polytéréphtalate de butylène.

3. Une composition de résine polyester selon la revendication 1 ou 2, caractérisée par le fait que ledit élastomère polyester (B) est un copolyester comprenant un segment dur constitué de motifs récurrents d'un phtalate d'un glycol aliphatique inférieur et un segment mou constitué d'un phtalate d'un poly(oxyde d'alkylène)-glycol.

4. Une composition de résine polyester selon l'une quelconque des revendications 1 à 3, caractérisée par le fait que ledit ester de sorbitanne (C) a un indice d'hydroxyle de 50 à 400 exclusivement.

5. Une composition de résine polyester selon l'une quelconque des revendications 1 à 3, caractérisée par le fait que ledit ester de sorbitanne (C) a un indice d'hydroxyle de 150 à 300 exclusivement.

6. Une composition de résine polyester selon l'une quelconque des revendications 1 à 5, caractérisée par le fait que l'acide gras constituant ledit composant (C) est un acide gras ayant 16 à 32 atomes de carbone.

7. Une composition de résine polyester selon l'une quelconque des revendications 1 à 6, caractérisée par le fait que ledit composant (C) est un ester d'un sorbitanne avec l'acide stéarique ou l'acide béhénique.
